# EUROPÄISCHE PATENTSCHRIFT

(11) **EP 0 666 634 B1**
(45) Veröffentlichungstag und Bekanntmachung des Hinweises auf die Patenterteilung: **10.06.1998**
(21) Anmeldenummer: 95250017.1
(22) Anmeldetag: 25.01.1995
(51) Int. Cl.: H02K 7/18, H02K 21/22, H02K 7/08, H02K 7/00, F16D 3/77

(54) **Baueinheit aus einem Verbrennungsmotor und einem elektrischen Generator**
Assembly of a combustion engine and an electric generator
Ensemble moteur à combustion et générateur électrique

(30) Priorität: 08.02.1994 DE 4404791
(43) Veröffentlichungstag der Anmeldung: 09.08.1995
(73) Patentinhaber: Mannesmann Sachs Aktiengesellschaft, 97424 Schweinfurt (DE)
(72) Erfinder: Lutz, Dieter, D-97422 Schweinfurt (DE); Nagler, Franz, D-97503 Gädheim-Ottendorf (DE)
(74) Vertreter: Meissner, Peter E., Dipl.-Ing.

(56) Entgegenhaltungen:
- WO-A-92/02741
- DE-C- 629 324
- GB-A- 2 043 208
- PATENT ABSTRACTS OF JAPAN vol. 008 no. 206 (E-267) ,20.September 1984 & JP-A-59 092740 (HONDA GIKEN KOGYO KK) 29.Mai 1984,
- PATENT ABSTRACTS OF JAPAN vol. 017 no. 374 (M-1445) ,14.Juli 1993 & JP-A-05 060147 (KOYO SEIKO CO LTD) 9.März 1993,

## Beschreibung

Die Erfindung betrifft eine Baueinheit gemäß dem Gattungsbegriff des Patentanspruchs 1.

Im Rahmen der vorliegenden Erfindung ist mit dem Begriff Generator nicht die übliche, im Vergleich zur Nennleistung des Verbrennungsmotors nur eine kleine Leistung aufweisende Lichtmaschine gemeint; vielmehr handelt es sich hierbei um ein Stromerzeugungsaggregat, das - als Alternative zu einem konventionellen Antriebsstrang - die elektrische Antriebsenergie für zum Antrieb eines Fahrzeugs vorgesehene elektrische Fahrmotoren liefern soll und daher eine Nennleistung in der Größenordnung des Verbrennungsmotors aufweist (vollelektrische Leistungsübertragung).

Die Erfindung geht aus von der WO 92/02741, die die Ausbildung einer Kupplung zwischen einem Dieselmotor und einem Generator beschreibt.

Ein solches Antriebssystem für Straßenfahrzeuge ist beispielsweise aus der DE 41 33 013 A1 und auch aus VDI-Berichte 878 (1991), Seite 611-622, bekannt. Der Rotor des elektrischen Generators zur Stromerzeugung ist dabei unmittelbar fest an die Kurbelwelle des Verbrennungsmotors angeflanscht, also starr angekoppelt. Eine separate Lagerung des Rotors im Gehäuse des Generators ist bei einer solchen Verbrennungsmotor/Generator-Einheit nicht vorgesehen. Wegen der von der Kurbelwelle im Betrieb ausgehenden Laufunruhe, die sich insbesondere in leichten Verbiegungen der Kurbelwelle gegenüber der geometrisch idealen Drehachse, in Verlagerungen der Drehachse infolge des Verschleißes von Kurbelwellenlagern und in axialen Verschiebungen äußert, muß der zwischen dem Stator und dem Rotor des Generators bestehende Luftspalt ausreichend groß bemessen sein, um einen einwandfreien Betrieb (Generatorbetrieb oder Motorbetrieb; letzteres im Falle des Einsatzes des Generators auch als Anlasser für den Verbrennungsmotor) zu gewährleisten. Eine Vergrößerung des Luftspalts ist jedoch unerwünscht, da dies mit entsprechenden Verlusten im Wirkungsgrad des Generators verbunden ist. Hinzu kommt das Problem, daß die Montage der gesamten Bauheit, insbesondere wenn der Rotor als Außenläufer mit Erregung durch leistungsfähige Permanentmagnete (z.B. auf der Basis der Werkstoffe FeNdB oder SmCo) versehen ist, schwierig und aufwendig ist, wenn erst nach dem Anflanschen des Rotors an die Kurbelwelle das Generatorgehäuse mit dem darin befindlichen Stator angeschraubt werden muß. Dies erfordert eine sehr genaue Justierung, die bei Permanenterregung praktisch nicht ohne spezielle Vorrichtungen erreicht werden kann. Somit ergeben sich bei der Endmontage Probleme im Hinblick auf den erforderlichen Arbeitsaufwand und auf die Einhaltung der gestellten Qualitätsanforderungen, die einer wirtschaftlichen Serienfertigung im Wege stehen.

Aufgabe der Erfindung ist es daher, eine konstruktive Form für die Baueinheit von Verbrennungsmotor und Generator vorzuschlagen, die ein hohes Qualitätsniveau sicherstellt und gleichzeitig auch die Herstellkosten senkt.

Gelöst wird diese Aufgabe erfindungsgemäß für eine gattungsgemäße Baueinheit mit den kennzeichnenden Merkmalen des Patentanspruchs 1. Vorteilhafte Weiterbildungen der Erfindung sind in den Unteransprüchen 2 bis 13 angegeben.

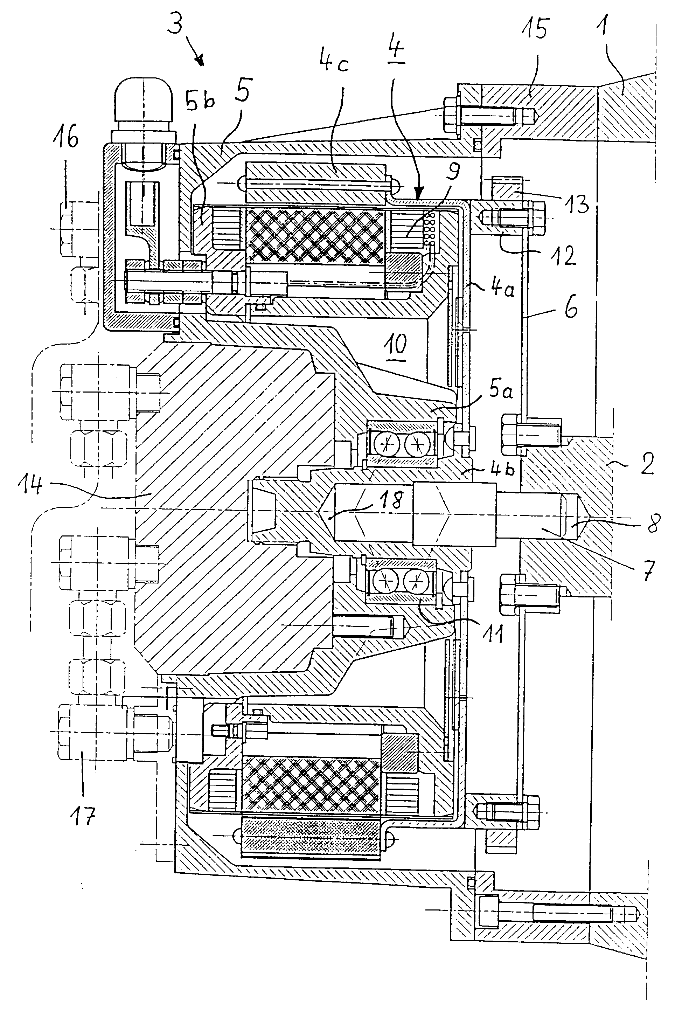

Anhand des in der einzigen Figur als axialer Längsschnitt einer Verbrennungsmotor/Generator-Einheit dargestellten Ausführungsbeispiels wird die Erfindung nachfolgend näher beschrieben.

Das Schnittbild deutet an seinem rechten Rand den Verbrennungsmotor lediglich mit dem Anschlußbereich seines Motorgehäuses 1 und der Kurbelwelle 2 an. Der elektrische Generator 3 weist ein Generatorgehäuse 5, einen Rotor 4 (Außenläufer) und einen mit dem Teil 5b des Statorgehäuses 5 fest verbundenen innenliegenden Stator mit Statorwicklungen 9 auf. Der Rotor 4 ist mit einer Vielzahl von abwechselnd gepolten Permanentmagneten 4c mit hoher magnetischer Feldstärke bestückt. Anstelle eines permanenterregten Außenläufers könnte im Prinzip auch ein Rotor mit elektromagnetischer Erregung vorgesehen sein. Die Kommutierung des Stroms in den Statorwicklungen 9 wird im vorliegenden Fall nicht elektromechanisch, sondern durch eine nicht dargestellte Leistungselektronik vorgenommen. Es ist auch möglich, wenngleich weniger bevorzugt, den Generator als Innenläufermaschine auszubilden, wobei das Gehäuse des Generators entsprechend modifiziert werden müßte.

Das Generatorgehäuse 5 ist fest an das Motorgehäuse 1 angeschraubt, allerdings nicht unmittelbar, sondern über einen an das Motorgehäuse 1 angeschraubten Zwischenflansch 15, der anschlußseitig das Ende der Kurbelwelle 2 nach links hin überragt. Dieser Zwischenflansch 15 ist deswegen vorteilhaft, weil er eine entsprechende Verlängerung des Generatorgehäuses 5 nach rechts oder alternativ des Motorgehäuses 1 nach links erspart. Hierdurch ist es möglich, die Anschlußseite des Verbrennungsmotors, der auch für Fahrzeuge mit herkömmlichem mechanischen Antriebsstrang eingesetzt werden soll (Anflanschung der Getriebeglocke), ebenso unverändert zu lassen wie die Anschlußseite des Generatorgehäuses 5, welches baugleich ausgeführt ist wie das Gehäuse eines entsprechenden Elektromotors für den Antrieb der Fahrzeugräder. Genauer gesagt handelt es sich bei diesem Generatorgehäuse 5 um die eine Hälfte eines Gehäuses eines spiegelsymmetrisch gestalteten Doppelmotors (Tandemmotor), wie er in der oben erwähnten Veröffentlichung VDI-Berichte beschrieben ist. Die Anwendung eines solchen kostengünstig herstellbaren Zwischenflansches 15 ermöglicht daher sowohl für das Generatorgehäuse 5 als auch für das Motorgehäuse 1 die Weiterverwendung üblicher Serienteile und trägt somit zu einer deutlichen Kostenverminderung, besonders im Falle relativ kleiner Serienstückzahlen bei. Dagegen dürfte bei Großserienproduktion eine einteilige Ausführung des Generatorgehäuses im Regelfall kostengünstiger sein.

Das Generatorgehäuse 5 weist eine von links nach rechts sich in den durch die Statorwicklungen 9 umschlossenen Bauraum 10 hinein erstreckende Einstülpung 5a auf. Die Permanentmagnete 4c des Rotors 4 sind an einem vorzugsweise als relativ dünnwandiges, radkörperartiges Teil (beispielsweise aus Blech) gefertigten Rotorträger 4a befestigt. Im Bereich der Drehachse des Rotors 4 ist der Rotorträger 4a fest verbunden mit einer Rotornabe 4b, die sich von der Ebene der rechten Stirnseite des Rotorträgers 4a nach links in den Bauraum 10 oder, besser gesagt, in eine entsprechende Öffnung der Einstülpung 5a hinein erstreckt. Die Einstülpung 5a reicht bis nahe an die Stirnseite des Rotorträgers 4a heran.

Die Rotornabe 4b ist innerhalb der Ausstülpung 5a (vorzugsweise nahe dem Rotorträger 4a) drehbar gelagert. Im dargestellten Beispiel ist die Lagerung 11 als zweireihiges Wälzlager, und zwar als Kugellager ausgeführt. Durch entsprechende Anschlagbunde und Sicherheitsringe bildet es ein axiales Festlager. Um eine exakte koaxiale Ausrichtung gegenüber der Kurbelwelle 2 zu gewährleisten, ist in der Rotornabe 4b und in der Kurbelwelle 2 koaxial zur Drehachse jeweils eine Zentrierbohrung 18 bzw. 8 angebracht, in die ein entsprechend geformter Zentrierzapfen 7 eingelassen ist. Da der Zentrierzapfen 7 in der Rotornabe 4b verbleibt, bewirkt er eine dauerhafte Ausrichtung der Drehachse des Rotors 4. Daher könnte die Lagerung 11 auch als einreihiges Wälzlager ausgeführt werden. In manchen Fällen läßt sich die Lagerung 11 darüber hinaus auch als Loslager gestalten.

Neben einer an sich nicht nötigen und bisher nicht üblichen separaten Lagerung des Rotors 4 innerhalb des Statorgehäuses 5 sieht die Erfindung vor, daß die Ankopplung des Rotors 4 an die Kurbelwelle 2 zur Drehmomentübertragung nicht direkt, sondern über eine insbesondere in axialer Richtung elastisch verformbare Drehmomentübertragungsscheibe 6, wie sie etwa unter dem Begriff "Flexplate" an sich bereits bekannt ist, erfolgt. Die Flexplate 6 ist im Ausführungsbeispiel im wesentlichen als ebene kreisförmige Scheibe ausgebildet, die fest an die Stirnseite (Abtriebsende) der Kurbelwelle 2 angeschraubt ist. Umfangsseitig ist sie über einen fest mit dem Rotorträger 4a verbundenen Anschlußkörper 12 verschraubt. Für den Fall, daß der Generator 3 nicht als Anlasser für den Verbrennungsmotor verwendet werden kann, bietet es sich an, den Zahnkranz 13 für den (nicht dargestellten) Anlasser außen an dem Anschlußkörper 12 vorzusehen. Selbstverständlich wäre es auch möglich, den Rotorträger 4a unmittelbar so auszubilden, daß die Flexplate 6 daran angeschraubt werden könnte. Dies hätte aber den Nachteil, daß als Rotorträger 4a nicht mehr dasselbe Funktionsteil verwendet werden könnte, wie es für einen im wesentlichen baugleichen Elektromotor bereits vorhanden ist.

Da es während des Generatorbetriebs zu unvermeidbaren Wirkungsgradverlusten kommt, die sich in einer unerwünschten Erwärmung es Generators 3 äußern, ist es notwendig, eine Zwangskühlung vorzusehen. Mit den Bezugszeichen 17 und 16 sind daher ein Kühlmittelvorlauf bzw. ein Kühlmittelrücklauf einer Flüssigkeitskühlung bezeichnet, deren Zwangsumlauf durch eine Kühlmittelpumpe 14 gewährleistet wird. Mit großem Vorteil wird für diese Kühlmittelpumpe 14 der freie innere Teil der in den Bauraum 10 hineinragenden Einstülpung 5a des Generatorgehäuses 5 genutzt, da auf diese Weise ein direkter Antrieb über die Kurbelwelle 2 erfolgen kann. Die Kühlmittelumwälzung erfolgt zwangsläufig immer dann, wenn der Verbrennungsmotor (und damit selbstverständlich auch der Generator 3) läuft. Zu diesem Zweck ist die Rotornabe 4b an ihrem linken freien Ende drehfest mit der vorzugsweise als Hohlwelle ausgeführten Antriebswelle der Kühlmittelpumpe 14 verbunden. Aus Montagegründen wird eine steckbare formschlüssige Verbindung der Wellen bevorzugt.

Die Montage der Baueinheit kann in folgender Weise vorgenommen werden. Zunächst werden der Zwischenflansch 15 an das Motorgehäuse 1 und mittels eines entsprechenden Anschlußflansches die Flexplate 6 an die Stirnseite der Kurbelwelle 2 angeschraubt. Der Generator 3 ist bereits als separat vormontierte Baueinheit verfügbar, d.h. daß der Rotor 4 bereits seine endgültige Lage im Generatorgehäuse 5 eingenommen hat. Nach Einsetzen des Zentrierzapfens 7, der auch unmittelbarer Bestandteil der Rotornabe 4b oder der Kurbelwelle 2 sein könnte, in die Zentrierbohrung 18 oder 8 wird der Generator 3 über den Zentrierzapfen 7 exakt koaxial zur Kurbelwelle 2 ausgerichtet und mit Schrauben am Zwischenflansch 15 befestigt. Auf diese Weise erübrigen sich aufwendigere Vorkehrungen zur Zentrierung am Motorgehäuse 1 bzw. am Zwischenflansch 15. Der Zentrierbolzen 7 verbleibt als verlorene Montagehilfe im Generator 3. Um die Flexplate 6 an den Anschlußkörper 12 anschrauben zu können, weist der Zwischenflansch 15 und/oder das Motorgehäuse 1 eine (nicht dargestellte) Öffnung auf, durch die die Befestigungsschrauben von außen zugänglich sind. Wenn die Rotornabe 4b insgesamt als Hohlwelle ausgeführt würde und der Innendurchmesser von rechts nach links hin nicht abnehmen würde, könnte der Zentrierzapfen 8 (bei entsprechend komplementärer Formgebung seiner Außenkontur) nach Montage des Generators 3 auch aus den Zentrierbohrungen 8, 13 wieder herausgezogen und erneut verwendet werden. In diesem Fall wäre es aber notwendig, den Einbau der Kühlmittelpumpe 14, sofern eine solche vorgesehen ist, erst danach vorzunehmen.

Die Vormontage des Generators 3 läuft in der Weise ab, daß zunächst das Kugellager 11 in die entsprechende Bohrung der Einstülpung 5a des Generatorgehäuses 5 eingesetzt und durch einen Sicherungsring axial festgelegt wird. Anschließend wird der aus Rotornabe 4b, Rotorträger 4a und Permanentmagneten 4c bestehende Rotor 4 von der rechten Seite in das Lager 11 eingepreßt und anschließend von der linken Seite her über einen auf der Rotornabe 4b sitzenden Sicherungsring auch zur linken Seite hin axial festgelegt. Danach kann die Kühlmittelpumpe 14 eingebaut werden.

Überraschenderweise kann durch die Erfindung nicht nur die erwünschte Vereinfachung und Erhöhung der Qualität bei der Endmontage der Baueinheit erreicht werden, sondern es wird trotz des Aufwandes für die zusätzlich erforderliche separate Lagerung des Rotors 4 im Generatorgehäuse 5 und das zusätzliche Bauelement "Flexplate 6" eine Reduktion der Herstellkosten möglich. Dies ist dadurch bedingt, daß die Toleranz des Luftspalts zwischen den Permanentmagneten und den Polen der Statorwicklungen 9 deutlich enger als beim bisherigen Stand der Technik gehalten werden kann. Hierdurch ergibt sich eine beträchtliche Leistungssteigerung des Generators 3, die ihrerseits eine entsprechende Verringerung des bei sonst gleicher Leistung erforderlichen Materialaufwandes an dem kostenintensiven hochwertigen Material für die Permanentmagneten erlaubt. Trotz des auf der einen Seite deutlich höheren Aufwandes ergibt sich insgesamt eine kostengünstigere Lösung, bei der vor allem auch eine wesentlich geringere Fehlerquote in der Montage erreicht wird.

## Patentansprüche

1. Baueinheit aus einem Verbrennungsmotor mit einem Motorgehäuse (1) und einer Kurbelwelle (2) für den Drehmomentabtrieb und aus einem elektrischen Generator/Motor (3), dessen Generatorgehäuse (5) fest mit dem Motorgehäuse (1) und dessen Rotor (4) koaxial drehfest mit der Kurbelwelle (2) verbunden ist, wobei eine elastisch verformbare Drehmomentübertragungsscheibe (Flexplate 6) vorgesehen ist, die fest an das Abtriebsende der Kurbelwelle (2) angeflanscht ist und umfangsseitig mit dem Rotor (4) fest verbunden ist, und wobei der Rotor (4) im Generatorgehäuse (5) drehbar gelagert ist,
dadurch gekennzeichnet,
daß der Rotor (4) als Außenläufer ausgebildet ist,
das Generatorgehäuse (5) eine in den von den Statorwicklungen (9) des Generators (3) umschlossenen Bauraum (10) hineinragende Einstülpung (5a) aufweist, die von der dem Rotorträger (4a) gegenüberliegenden Stirnseite des Generatorgehäuses (5) ausgeht, und daß die Einstülpung (5a) bis nahe an den Rotorträger (4a) heranreicht.

2. Baueinheit nach Anspruch 1,
dadurch gekennzeichnet,
daß der Rotor (4) mit Permanentmagneten (4c) bestückt ist.

3. Baueinheit nach einem der Ansprüche 1 bis 2,
dadurch gekennzeichnet,
daß der Rotor (4) einen vorzugsweise dünnwandigen, radkörperartigen Rotorträger (4a) und eine Rotornabe (4b) aufweist.

4. Baueinheit nach Anspruch 1,
dadurch gekennzeichnet,
daß die Lagerung (11) des Rotors (4) in der Einstülpung (5a) im Nahbereich des Rotorträgers (4a) angeordnet ist.

5. Baueinheit nach Anspruch 4,
dadurch gekennzeichnet,
daß die Lagerung (11) als Festlager ausgebildet ist.

6. Baueinheit nach Anspruch 4 oder 5,
dadurch gekennzeichnet,
daß die Lagerung (11) als zweireihiges Wälzlager, insbesondere als zweireihiges Kugellager ausgebildet ist.

7. Baueinheit nach Anspruch 4 oder 5,
dadurch gekennzeichnet,
daß die Lagerung (11) als einreihiges Wälzlager ausgebildet ist.

8. Baueinheit nach einem der Ansprüche 4 bis 7,
dadurch gekennzeichnet,
daß die Drehmomentübertragungsscheibe (6) über einen an dem Rotorträger (4a) fest angehefteten Anschlußkörper (12) mit dem Rotor (4) verschraubt ist.

9. Baueinheit nach Anspruch 8,
dadurch gekennzeichnet,
daß der Anschlußkörper (12) ringförmig ausgebildet ist und an seiner Außenseite einen Anlasserzahnkranz (13) aufweist.

10. Baueinheit nach einem der Ansprüche 4 bis 9,
dadurch gekennzeichnet,
daß auf der Innenseite der Einstülpung (5a) eine Kühlmittelpumpe angeordnet ist, deren Antriebswelle hohl ausgebildet ist und die mit dem freien Ende der Rotornabe (4b) drehfest, vorzugsweise durch eine formschlüssige Steckverbindung verbunden ist.

11. Baueinheit nach einem der Ansprüche 1 bis 10,
dadurch gekennzeichnet,
daß das Generatorgehäuse (5) über einen Zwischenflansch (15) mit dem Motorgehäuse (1) verschraubt ist.

12. Baueinheit nach einem der Ansprüche 1 bis 11,
dadurch gekennzeichnet,
daß in der Kurbelwelle (2) und/oder in der Rotornabe (4b) Zentrierbohrungen (8, 18) zur Aufnahme eines entsprechenden Zentrierzapfens (7) angebracht sind.

13. Baueinheit nach Anspruch 12,
dadurch gekennzeichnet,
daß die Zentrierbohrung (18) in der Rotornabe (4b) als durchgehende Bohrung ausgeführt ist zum Herausnehmen des Zentrierzapfens (7) nach Durchführung der Montage des Rotors (4).

## Claims

1. A structural unit consisting of an internal combustion engine with a motor housing (1) and a crankshaft (2) for the torque takeoff, and of an electric generator/motor (3), the generator housing (5) of which is connected securely to the motor housing (1) and the rotor (4) of which is connected coaxially non-rotationally to the crankshaft (2), with an elastically deformable torque transmission disc (flexplate 6) being provided which is securely flange-connected to the power takeoff end of the crankshaft (2) and is connected securely to the rotor (4) on the periphery, and the rotor (4) being rotationally mounted in the generator housing (5),
characterised in that
the rotor (4) is designed as an external rotor, the generator housing (5) has a cone (5a) projecting into the space (10) surrounded by the stator windings (9) of the generator (3), which cone starts from the end face of the generator housing (5) located opposite the rotor holder (4a), and that the cone (5a) extends into the near vicinity of the rotor holder (4a).

2. A structural unit according to Claim 1, characterised in that the rotor (4) is equipped with permanent magnets (4c).

3. A structural unit according to one of Claims 1 to 2, characterised in that the rotor (4) has a preferably thin-walled, wheel body-like rotor holder (4a) and a rotor hub (4b).

4. A structural unit according to Claim 1, characterised in that the bearing (11) of the rotor (4) is arranged in the cone (5a) in the vicinity of the rotor holder (4a).

5. A structural unit according to Claim 4, characterised in that the bearing (11) is designed as a fixed bearing.

6. A structural unit according to Claim 4 or 5, characterised in that the bearing (11) is designed as a two-row rolling bearing, in particular as a two-row ball bearing.

7. A structural unit according to Claim 4 or 5, characterised in that the bearing (11) is in the form of a single-row rolling bearing.

8. A structural unit according to one of Claims 4 to 7, characterised in that the torque transfer disc (6) is screwed to the rotor (4) via a connection element (12) securely fastened to the rotor holder (4a).

9. A structural unit according to Claim 8, characterised in that the connection element (12) is annular and has a starter ring gear (13) on its outside.

10. A structural unit according to one of Claims 4 to 9, characterised in that a coolant pump is located on the inside of the cone (5a), the drive shaft of which pump is hollow and which is connected non-rotationally to the free end of the rotor hub (4b), preferably by a positive plug-in connection.

11. A structural unit according to one of Claims 1 to 10, characterised in that the generator housing (5) is screwed to the motor housing (1) via an intermediate flange (15).

12. A structural unit according to one of Claims 1 to 11, characterised in that centring bores (8, 18) for receiving a corresponding centring pin (7) are made in the crankshaft (2) and/or in the rotor hub (4b).

13. A structural unit according to Claim 12, characterised in that the centring bore (18) in the rotor hub (4b) is designed as a continuous bore for removing the centring pin (7) after effecting the assembly of the rotor (4).

## Revendications

1. Unité de construction constituée d'un moteur à combustion interne, comportant un carter (1) de moteur et un vilebrequin (2) destiné à la transmission du couple de rotation, et d'un générateur/moteur électrique (3) dont le carter (5) de générateur est relié solidairement au carter (1) du moteur, et dont le rotor (4) est solidairement relié coaxialement au vilebrequin (2), un disque de transmission du couple de rotation élastiquement déformable (plaque Flex 6) étant prévu, lequel est fixé par bride sur l'extrémité de sortie du vilebrequin (2) et relié solidairement au rotor (4) au niveau de sa circonférence, et le rotor (4) étant logé en rotation dans le carter (5) du générateur
caractérisée en ce que
le rotor (4) est réalisé sous la forme d'un induit extérieur,
en ce que le carter (5) du générateur comporte un déport en forme de cloche (5a) qui pénètre dans l'espace de construction (10) délimité par les enroulements statoriques (9) du générateur (3), et qui part de la face frontale du carter (5) du générateur opposée au support (4a) du rotor, et en ce que le déport en forme de cloche (5a) s'étend jusqu'à proximité du support (4a) du rotor.

2. Unité de construction selon la revendication 1,
caractérisée en ce que
le rotor (4) est muni d'aimants permanents (4c).

3. Unité de construction selon la revendication 1 ou 2,
caractérisée en ce que
le rotor (4) comporte un support (4a) de rotor de type corps de roue, ayant de préférence une épaisseur de paroi mince, et un moyeu (4b) de rotor.

4. Unité de construction selon la revendication 1,
caractérisée en ce que
le palier (11) du rotor (4) est disposé à proximité du support (4a) du rotor dans le déport en forme de cloche (5a).

5. Unité de construction selon la revendication 4,
caractérisée en ce que
le palier (11) est réalisé sous la forme d'un palier fixe.

6. Unité de construction selon la revendication 4 ou 5,
caractérisée en ce que
le palier (11) est réalisé sous la forme d'un palier de roulement à double rangée, notamment d'un roulement à double rangée de billes.

7. Unité de construction selon la revendication 4 ou 5,
caractérisée en ce que
le palier (11) est réalisé sous la forme d'un palier de roulement à simple rangée.

8. Unité de construction selon l'une quelconque des revendications 4 à 7,
caractérisée en ce que
le disque (6) de transmission du couple de rotation est vissé sur le rotor (4) par l'intermédiaire d'un corps de raccordement (12) qui est relié solidairement au support (4a) du rotor.

9. Unité de construction selon la revendication 8,
caractérisée en ce que
le corps de raccordement (12) est de forme annulaire et comporte une couronne dentée (13) de démarreur sur sa face extérieure.

10. Unité de construction selon l'une quelconque des revendications 4 à 9,
caractérisée en ce que
une pompe d'agent de refroidissement est disposée sur la face intérieure du déport en forme de cloche (5a), dont l'arbre d'entraînement est creux, et qui est relié solidairement à l'extrémité libre du moyeu (4b) de rotor, de préférence au moyen d'une liaison emboîtée par complémentarité de forme.

11. Unité de construction selon l'une quelconque des revendications 1 à 10,
caractérisée en ce que
le carter (5) du générateur est vissé sur le carter (1) du moteur par l'intermédiaire d'une bride intermédiaire (15).

12. Unité de construction selon l'une quelconque des revendications 1 à 11,
caractérisée en ce que
des perçages de centrage (8, 18) destinés à recevoir un tourillon de centrage (7) correspondant sont pratiqués dans le vilebrequin (2) et/ou le moyeu (4b) de rotor.

13. Unité de construction selon la revendication 12,
caractérisée en ce que
le perçage de centrage (18) dans le moyeu (4b) de rotor est réalisé en tant que perçage traversant afin de pouvoir retirer le tourillon de centrage (7) après le montage du rotor (4).
